# EUROPEAN PATENT APPLICATION

(11) **EP 4 737 364 A1**
(43) Date of publication of application: **06.05.2026**
(21) Application number: 24209649.3
(22) Date of filing: 29.10.2024
(51) Int. Cl.: B65G 65/23

(54) **A BIN TIPPER**

(71) Applicant: Deprez Construct NV, 8610 Kortemark (BE)
(72) Inventor: DECLERCK, Jonas, 8480 Eernegem (BE); SMISMANS, Tomas, 8800 Rumbeke (BE); DEPREZ, Johan, 8680 Koekelare (BE)
(74) Representative: Ipsilon Belgium

(57) **Abstract**

A bin tipper comprises:
- a rotary unit comprising:
o two lateral side walls, both of which are bounded at the top by a circular arched edge;
o an upper wall which at least partially coincides with the cylindrical mantle surface between the circular arced edges of the two lateral side walls in a transverse direction and which spans the distance between the circular arced edges of the two lateral side walls, and which is rotatable around a first axis of rotation encompassing the centers of the two circular arc edges;
o two transverse faces between the two lateral side walls, at least one of which is an open transverse face,
o a bottom surface,

- a fixed unit comprising a bottom surface that is at least partly open, the rotary unit being suspended rotatable around a second axis of rotation in this fixed unit and where the second axis of rotation is parallel to the first axis of rotation,
- a rotation system to rotate the rotary unit around the second axis of rotation;
- at least one blocking means preventing the upper wall from rotating with the rotary unit from a predefined rotation angle of the rotary unit onwards around the second axis of rotation.

## Description

### Field of the Invention

The present invention generally relates to bin tippers, more in particularly to bin tippers tipping the content vertically downwards to a position under the bin tipper. The bin tipper may be used to tip root crops or other vegetables and/or fruit.

### Background of the Invention

It is well known and used to store and transport root crops or other vegetables and/or fruit in bins, such as wooden bins (also referred to as cradles or crates). Not only freshly harvested vegetables and fruits are stored and transported in this way, but also washed or partially treated vegetables and/or fruits are carried and kept in bins.

These bins have a large dimension to carry large amounts at once, usually several tons of product per bin. During handling and use, the bins needs to be emptied. This must be done cautiously in order not to damage or "hurt" the vegetables or fruits and guide the products in the best conditions to further processes without damage.

Bin tippers are known for this cautiously empty bins. An example is shown in JP7137186B2. However there is still a need to provide a bin tipper which can tip the bin and provide the content of the bin vertically downwards to a position under the bin tipper during tipping. This in order to safe surface in the production halls and to make production processes more compact.

### Summary of the Invention

According to a first aspect of the invention, a bin tipper is provided, which bin tipper comprises:
- a rotary unit comprising:
   ∘ two lateral side walls, both of which are bounded at the top by a circular arched edge;
   ∘ an upper wall which at least partially coincides with the cylindrical mantle surface between the circular arced edges of the two lateral side walls in a transverse direction and which spans the distance between the circular arced edges of the two lateral side walls, and which is rotatable around a first axis of rotation encompassing the centers of the two circular arc edges;
   ∘ two transverse faces between the two lateral side walls, at least one of which is an open transverse face,
   ∘ a bottom surface,
- a fixed unit comprising a bottom surface that is at least partly open, the rotary unit being suspended rotatable around a second axis of rotation in this fixed unit and where the second axis of rotation is parallel to the first axis of rotation,
- a rotation system to rotate the rotary unit around the second axis of rotation;
- at least one blocking means preventing the upper wall from rotating with the rotary unit from a predefined rotation angle of the rotary unit onwards around the second axis of rotation.

The open space in the rotary unit, which is defined by the two lateral side walls, the upper wall the transverse faces and the bottom surface, is adapted to receive a bin or container, of which the content is to be emptied though the bottom surface of the fixed unit.
According to some embodiments, the predefined rotation angle of the rotary unit may be 75° or more but is less than 180°.. More preferred, this predefined rotation angle may be chosen between 75° and 110°, such as between 85° and 105°, e.g. at about 90°.

A rotation angle of 0° is to be understood as the rotatory unit and the fixed unit having their bottom surfaces parallel, the cylindrical mantle surface between the circular arced edges of the two lateral side walls being above both bottom surfaces.

According to some embodiments, the full upper wall may coincide with at least a part of the cylindrical mantle surface between the circular arced edges of the two lateral side walls. Hence over the total surface of the upper wall, this upper wall may coincide with the profile of the cylindrical mantle surface between the circular arced edges of the two lateral side walls. The part or segment of the cylindrical mantle surface with which the upper wall coincide, may have a smaller arc as compared to the arc of the complete circular arced edges of the two lateral side walls. As such the upper wall may close a part of the cylindrical mantle surface between the circular arced edges of the two lateral side walls.

According to some embodiments, the direction of rotation of the rotary unit may define a leading transverse face and a tailing transfers face, said part of the cylindrical mantle surface between the circular arced edges of the two lateral side walls abuts the upper edge of the leading transverse face.

According to some embodiments, the full upper wall may coincide with the total cylindrical mantle surface between the circular arced edges of the two lateral side walls. As such the upper wall abuts both the leading transverse face and a tailing transfers face and thereby closes the upper side of the rotary unit.

According to some embodiments, both transverse faces may be open transverse faces.

The bin or container to be tipped, may be brought in or taken out of the rotary unit from both transverse sides of the rotary unit. Most preferably the bin or container may be inserted via one of the open transverse faces, and may be taken out via the other of the open transverse faces. Hence the bin or container may travel through the rotary unit. This facilitates an easy flow of bins or containers being tipped, and reduces the stand still of the bin tipper during loading and unloading, as while unloading a tipped bin or container, a fresh bin or container to be tipped may be inserted from the other side.

The bin tipper preferably comprises a transporting means to bring a bin or container to the open transverse face. This means may e.g. a transport belt or a roller conveyor. In case both traverse faces are open, the transporting means may be present at both traverse faces to bring a bin or container to the open transverse face via one of the open traverse faces, and guide the bin or container away from the second open transverse face. As an example, a transport belt or a roller conveyor may be present at both traverse faces of the bin tipper.

According to some embodiments, the first and second axis of rotation may coincide. This coinciding arrangement may facilitate simpler and easy mechanical construction and may reduce the number of parts to be used, in particularly the number of moving parts of the tipper. The space defined by the bottom of the rotary unit, the part of the lateral walls under circular segment of the two lateral side walls defined by the circular arced edges of the two lateral side walls and the traverse sides preferably is cuboid shaped.

According to some embodiments, the square of maximum height measured between an outer point of the circular arced edges of the two lateral side walls and the bottom surface (B) may be less than or equal to four times the square of the radius (R) of the circular arced edges, minus the square of the maximum width of the two lateral side walls (A). Or in other words in these embodiments: B² <= 4*R² - A².

When lateral walls are provided following this rule, the lateral walls are circumscribed by or within the circle with a radius being the radius (R) of the circular arced edges. This has the advantage that the complete rotary unit may rotate even 360° in the fixed unit.

The arc of the circular arced edges of the two lateral side walls is less than or equal to half a circle, most preferably less than half a circle, even equal or less than an arc of 90°.

The fixed unit may comprise a frame to support the rotary unit. The fixed unit has a bottom surface that is at least partly open, preferably even completely open. The bin tipper is adapted to tip the content of the bin or container held by the rotary unit, through the at least partly open, preferably even completely open bottom surface of the fixed unit.

The bin tipper may have a funnel or a receiving means under the at least partly open, preferably even completely open bottom surface, to receive the content of the tipped bin or container held by the rotary unit. The bin tipper may even have a transportation means, like a rotating belt or alike, to guide the content of the tipped bin or container held by the rotary unit further to another device being part of a production process.

The one or more blocking means preventing the upper wall from rotating with the rotary unit from a predefined rotation angle of the rotary unit onwards around the second axis of rotation, may simply be parts of the fixed unit's frame, like fingers or pars or alike, which coincide with the rotating path of the leading edge of the upper wall during rotation.

According to some embodiments, the fixed unit may comprise a frame, the blocking means may comprise one or more parts of said frame intersecting with the rotating path of the leading edge of the upper wall during rotation.

As an example, the blocking means may be one or more protruding frame elements, extending to and intersecting with the rotating path of the leading edge of the upper wall during rotation. When the rotary unit is rotating, the blocking means will contact the leading edge of the upper wall at a given angular rotation, and hinder further rotation of the upper wall, while the rotary unit may continue rotating. As an alternative, the blocking means may be one or more protruding elements on the leading edge of the upper wall, extending to and intersecting with the frame of the fixed unit during rotation. When the rotary unit is rotating, the blocking means will contact the frame at a given angular rotation, and hinder further rotation of the upper wall, while the rotary unit may continue rotating. The upper wall, relatively seen, will rotate in the opposite direction round the first axis of rotation, while the other parts of the rotary unit continue rotating round the second axis of rotation. The upper wall, during this further rotation, so-to-say, will be in standstill in view of the fixed unit. As such the upper side of the rotary unit will be opened gradually and the content of the bin, being tipped by said rotation, may leave the bin through the gradually opened upper side of the rotary unit.

Inside the rotary unit, a grabbing frame may be provided to grab and keep the bin in the rotary unit in a fixed position in view of the rotary unit, during tipping of the bin, i.e. during rotation of the rotary unit.

The bin tipper may comprise on or a plurality of sensors to ensure the proper working of the bin tipper.

According to some embodiments, the rotary unit may comprise one or more bin sensors for detecting the presence of and/or the position of a bin in the rotary unit. These bin sensors may be e.g. inductive or capacitive sensors, like inductive or capacitive proximity switches and sensors, ultrasonic proximity sensors, optical sensors like photosensors, e.g. photoelectric proximity sensors, magnetic sensors like magnetic proximity sensors, mechanical sensors, cameras, and alike.

Preferably one bin sensor is present near or at the intersection of the bottom surface and the leading traverse face. The sensor may be adapted to detect and determine the presence of a bin at this intersection, or may even be adapted to detect that a bin exceeds the traverse face in case this is an open face.

Further, preferably one bin sensor is present near or at the intersection of the bottom surface and the tailing traverse face. The sensor may be adapted to detect and determine the presence of a bin at this intersection, or may even be adapted to detect that a bin still extends through this traverse face in case this is an open face.

According to some embodiments, the rotary unit may comprise one or more sensors for determining the rotational position of the rotary unit. These bin sensors may be or comprise an inclinometer or tilt sensor and/or a 0° rotation sensor, and alike.

According to some embodiments, the rotary unit may comprise one or more movable impediments to block the movement of a bin in view of the rotary unit during rotation. Such impediments may be e.g. bars or fingers that prevent the bin to pass an open traverse side of the rotary unit, e.g. a traverse bar or one or more traverse fingers at the intersection of the bottom surface and the leading traverse face, and/or a traverse bar or traverse fingers at the leading traverse face under the leading outer points of the circular arced edges of the two lateral side walls.

These bars or fingers may move between a first position where they do not impede the movement of a bin in view of the rotary unit during rotation and a second position where they do impede the movement of a bin in view of the rotary unit during rotation.

According to some embodiments, the rotary unit may comprise one or more sensors for determining the position of the one or more moveable impediments. These sensors may be e.g. inductive or capacitive sensors, like inductive or capacitive proximity switches and sensors, ultrasonic proximity sensors, optical sensors like photosensors, e.g. photoelectric proximity sensors, magnetic sensors like magnetic proximity sensors, mechanical sensors, cameras, and alike.

In case the bin tipper comprises transporting means to bring a bin or container to an open transverse face, and/or to take a bin or container away from an open transverse face, sensors may be provided at or on these transporting means to detect the presence and/or the position of the bin or container in view of the open transverse face in particular, or the fixed unit and/or the rotary unit in general.

These sensors may be e.g. These sensors may be e.g. inductive or capacitive sensors, like inductive or capacitive proximity switches and sensors, ultrasonic proximity sensors, optical sensors like photosensors, e.g. photoelectric proximity sensors, magnetic sensors like magnetic proximity sensors, mechanical sensors, cameras, and alike.

The bin tippers according to this aspect of the invention can tip the bin and provide the content of the bin vertically downwards to a position under the bin tipper during tipping. As such, surface in the production halls is reduced and saved, and possible production processes are made more compact. This while the upper wall prevents goods to leave the tipping process and prevent goods to be hit or impacted too hard on the surfaces of the other elements of the bin tipper.

According to a second aspect of the present invention, the bin tipper according to the first aspect of the invention is used for removing goods in a bin or container, such as storage containers of transport containers. Preferably, even advantageously, the goods may be tipped vertically downwards to a position under the bin tipper.

The goods may be vegetables and/or fruits, such as root crops such as potatoes, onions, carrots, turnips, beets and in particular potatoes, bulbs like flower bulbs, e.g. tulip bulbs, nuts and alike, and any or all of these being whether or not freshly harvested or washed or peeled.

It is understood that features from one aspect of the invention may be used in combination with one or more, even all features of any or all other aspects of the invention.

In the context of this invention, when reference is made to ranges, the ranges are to be understood inclusive, unless otherwise indicated.

### Brief Description of the Drawings

Fig. 1 and 2 illustrate a bin tipper according to the invention.
Fig. 3 to 10 illustrate the bin tipper of figures 1 and 2 during different steps of a process for tipping a bin according to the invention.
Figures 4 to 9 are shown as cross sections of the bin tipper of figures 1 and 2, the cross section being made by the plane XX', and viewed from the side indicated with arrow X".

In the figures, the same reference numbers refer to the same or a similar feature.

### Detailed Description of Embodiment(s)

An embodiment of the bin tipper according to the invention, and the process of using it, is hereinafter explained for a bin tipper tipping a bin or crate filled with potatoes. However, the invention and the use is not limited to potatoes, but can also be used for products in general, and tubers such as potatoes, onions, carrots, turnips, beets and more, for fruit, nuts, products whether freshly harvested or washed, from storage or transport crates. As will be set out in view of the figures, the embodiment shown in the figures will comprise two open transverse sides in the bin frame.

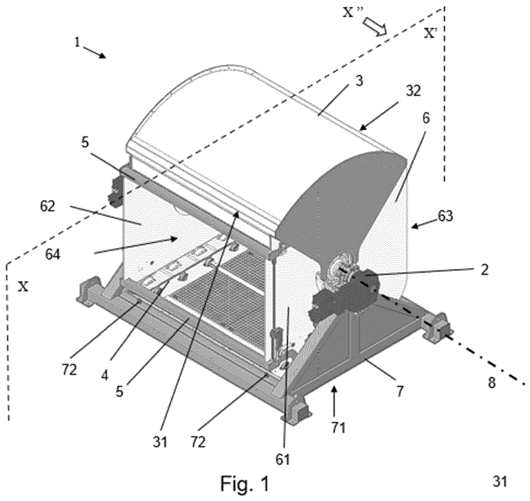

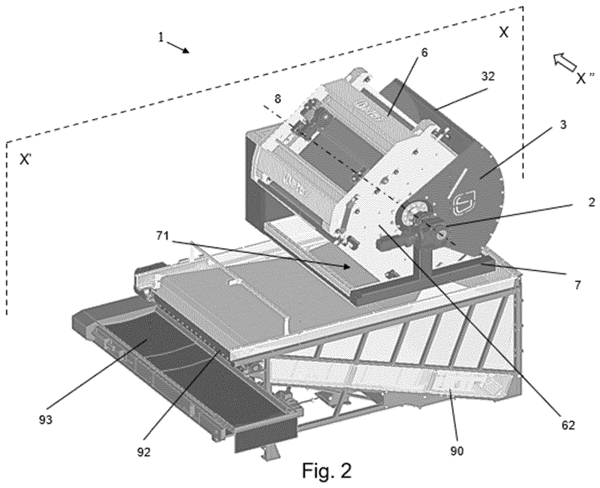

In general, a bin tipper 1 is shown in figure 1 and 2. The bin tipper 1 tips and may empty a bin by means of a rotary unit 6 comprising an upper wall 3. This upper wall 3 is at least partially coinciding with the cylindrical mantle surface between the circular arced edges of the two lateral side walls 61 and 62 in a transverse direction. In this embodiment, the upper wall is provided as a 90° section of a cylindrical mantle surface. When rotated to empty the bin to be tipped, the leading edge 31 of the upper wall is parallel with and coinciding with the upper wall of the second open transverse side 64. The tailing edge 32 of the upper wall is parallel with and coinciding with the upper wall of the first open transverse side 63.

So the upper wall 3 spans the distance between the circular arced edges of the two lateral side walls. The upper wall 3 is rotatable around a first axis of rotation encompassing the centers of the two circular arc edges, in this case the axis 8.

More in detail, the bin tipper 1 rotates a rotary unit 6 comprising at its top side the upper wall 3 . The rotary unit 6 comprises two lateral sides 61 and 62 and two open transverse sides 63 and 64. A fixed unit 7 supports the rotary unit 6 and the rotating system 2, e.g. comprising an electrically driven motor. The rotating system allows the rotary unit to rotate in the fixed unit around a rotation axis, in this embodiment also being axis 8. The upper wall 3 hence also rotates in relation to the rotary unit around its axis which coincides with this rotation axis 8. The rotary unit is provided with an inductive sensor 10 and inclinometer 11 to confirm that the rotary unit is in its 0° position or to determine the rotational position of the rotary unit 6 in the fixed unit 7.

The bin tipper 1 is equipped with two driven roller conveyor 4, one at each longitudinal side, for transporting bins 91 or crates in and out, optionally through the rotary unit 6. The bin is inserted through the first open transverse wall 63 against stops 5 at the second open transverse wall 64, in order to position the bin 91 within the rotary unit 6. In this embodiment, as both transverse sides 63 and 64 are open, the stops 5, being traverse bars, may be opened thereby allowing the transport of the emptied bin thought the second open transverse side 64. Detectors 14 are provided in order to determine the position of the stops, hence the bars. As an example, when the stops or bars are in the opened position, a detector 14 will detect the presence of the bar at a given position, while this detector 14 will not detect a presence of the bar at this given position when the stops, hence bars, are preventing the bin to pass the second traverse side. it is clear that the detectors may be positioned and work in the opposite way, detecting the stops being in closed position, not detecting them when these are in opened position. In order to control the presence and position of a bin in the rotary unit, the rotary unit may comprise sensors in the rotary unit 6, detecting a bin at both borders at the position indicated 12, near the transverse sides, and/or at the upper and lower side of one, or even both lateral walls.

The bin 91 may be transported from a roller conveyor from the input waiting unit 50 in front of the bin tipper, near the first open traverse side 63. The bin may be passed into the bin tipper by means of the roller conveyors of the intake waiting unit 50 and the driven roller conveyors 4. In a substantially similar way, the bin 91 may be transported by the driven roller conveyors 4 to an exit waiting unit 55 downstream of the bin tipper, near the second open traverse side 64. The bin may be passed from the bin tipper by means of the roller conveyors 4 and/or driven roller conveyors of the waiting unit 55. Each of the intake waiting unit 50 and the exist waiting unit 55 may be provided with a plurality of sensors 13 to detect the presence or absence of a bin on the roller conveyers.

The roller conveyors 4 carry the bin 91 within the rotary unit 6 when the rotary unit is in its normal, upwards orientation as shown in figures 1 and 2. In the width of the bin, the bin perfectly fits between the two lateral sides 61 and 62. Within the rotary unit, the rotary unit has a frame or four relatively thin rims 66, which fits snugly above the bin when inserted in the rotary unit 6. When the bin is tipped and rotated, the edges of the bin may contact this frame or these rims, and the frame or rims may support the bin when the bin is rotated upside down. As such the bin 91 may "hang" in rotated position, rotated over 180°.

The bin tipper comprises a fixed unit 7 comprising a bottom surface 71 that is at least partly open. The rotary unit 6 is suspended rotatable around an axis of rotation 8 in this fixed unit 7. In this embodiment, this axis of rotation is coinciding to the axis of rotation of the upper wall 3.

A rotation system to rotate the rotary unit around the axis of rotation 8, whereby this rotation system comprises a controlled electromotor, of which the speed and direction of the motor can be controlled and varied.

As visible in figure 1, at the lower side of the fixed unit 7 at the second transverse side 64, there is one and possibly more than one, blocking means preventing the upper wall 3 from rotating with the rotary unit 6 from a predefined rotation angle of the rotary unit onwards, in this embodiment, when the rotary unit is rotated about 90°, the leading edge 31 of the upper wall 3 will hit the small stud 72, which will prevent the upper wall 3 to further corotate with the rest of the rotary unit 6. As visible in figure 2, once the upper wall 3 is prevented to corotate, the upper side of the rotary unit, which comes slowly oriented downwards, can empty the content of the bin 91 through the open lower side or bottom side 71. Under this bottom side, a hopper 90 may be provided to receive the goods tipped out of the bin. A transport belt 92 may remove the goods from the hopper 90, and bring it to another conveyor belt 93, or alternatively to a flume, which will bring the goods to another location in the production facility. Meanwhile the rotation system will rotate the bin by means of the rotary unit 6 until the bin is upside down with the top side completely open. As in this embodiment, the height B measured between each of the two outer point 33 and 34 of the circular arced edges of the two lateral side walls and the bottom surface of the rotary unit is equal. This height B is less than or equal to four times the square of the radius R of the circular arced edges, minus the square of the in this case uniform width of the two lateral side walls A. so the total rotary unit is inscribed in the circle with radius R. thus the complete rotary unit 6 may rotate within the circle coinciding with the circular edge of the upper wall 3. Therefore no element of the rotary unit will block the rotation of the upper wall 3 along the traverse sides and the bottom side of the rotary unit 6.

The bin tipper may further comprise sensors to detect goods remaining in the bin when the bin is tipper over its maximum angle, in this embodiment over 180°C. these sensors may be provided at upper circular segment part of the lateral sides, or in at the lower bottom part of the fixed unit.

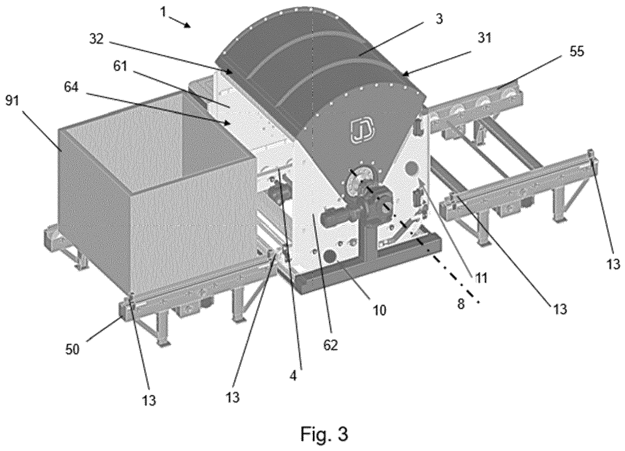

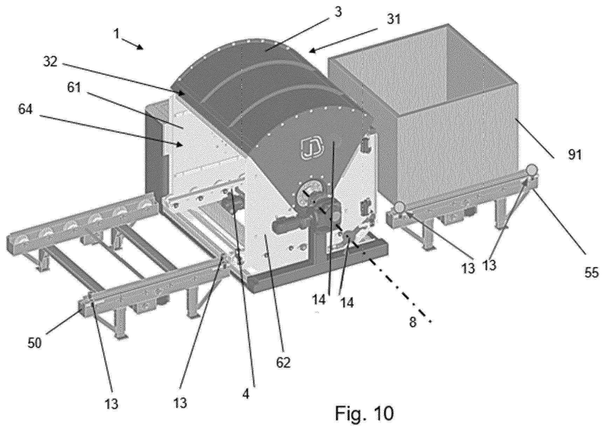

Using figures 3 to 10, the working of the bin tipper 1 will be further illustrated.

In figure 3, the starting of a tipping operation is shown. The bin 91 is awaiting in front of the first open traverse side 63 on the roller conveyers at the intake waiting unit 50, while the bin tipper 1 is detecting whether it is fit to receive a new bin to be tipped. Before a bin 91 can be inserted, the inductive sensor 10 and inclinometer 11 must confirm that the rotary unit is in its 0° position. Also, the stop detection sensors on both sides must confirm that the stops 5 are closed, preventing a bin from passing through the rotary unit 6.

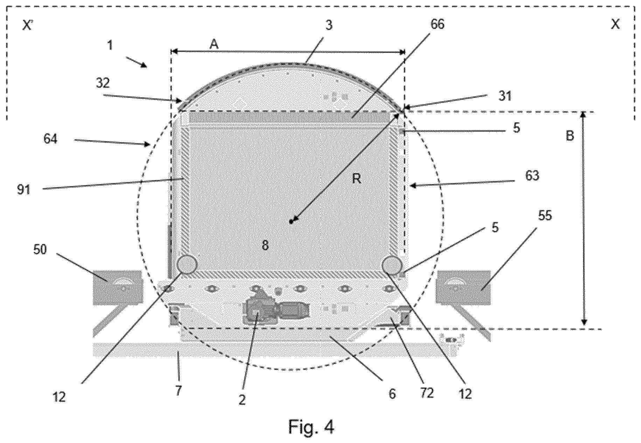

The bin, as shown, is forwarded from the driven roller conveyor of the intake waiting unit 50 in front of the bin tipper. The bin is now passed into the bin tipper by means of the roller conveyors of the waiting unit 50 and the driven roller conveyors 4 until the two sensors, e.g. photocells, on the intake waiting unit confirm the bin 91 has left, and the sensors in the rotary unit confirms the bin is in the required position for tipping. At( the exit waiting unit 55, the sensors, e.g. photocells, also confirm no earlier tipped bin is still in obstructing the rotation of the rotary unit. This positions are shown in figure 4. The bin tipper is now able to tip the bin in the rotary unit 6.

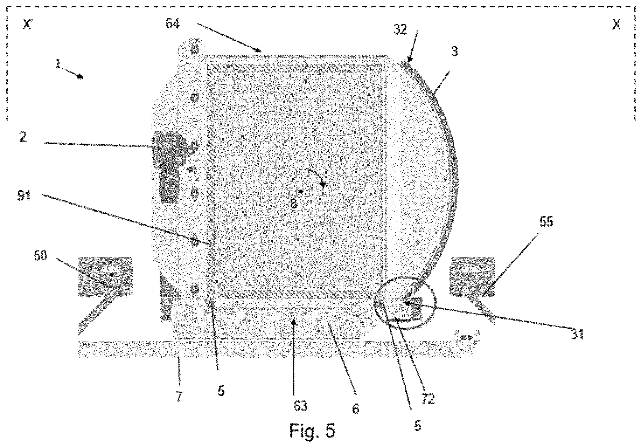

The rotary unit 6 with the bin 91, is gradually rotated, until the rotary unit has rotated 90° as shown in figure 5. The upper wall 3 now touches small studs 72. These studs 72 mechanically prevents the upper wall 3 to further continue its rotational path along with the rotary unit 6. The goods 100 in the bin 91 at present may already have moved towards the inner side of the upper wall 3. As the lateral sides close the sides of the rotary unit, and the upper wall 3 closes the top side of the rotary unit, these goods cannot leave the rotary unit yet.

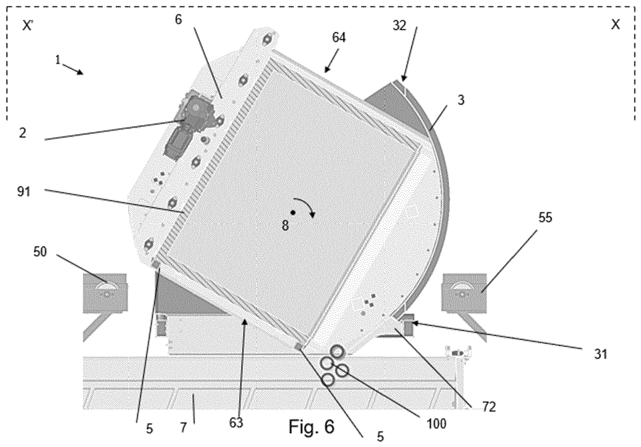

As of now and as shown in figure 6, the rotary unit 6 may continue its rotation while the upper wall 3 will be in stand still, hence de facto rotating backward in view of the rotary unit.

Since the bottom side 71 of the fixed unit 7 is open, and since the upper wall 3 is prevented to rotate further along with the rotary nit 6, the top side of the rotary unit will gradually open, allowing the goods 100 to leave the rotary unit, and by that the bin 91.

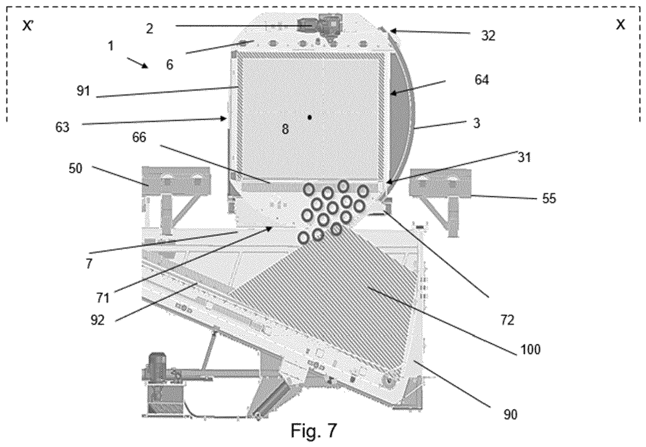

This tilting or rotation will continue until the rotary unit has made a rotation of 180°. The bin is now upside down and all the goods 100 can, and will have left the bin 91, as shown in figure 7. They may stay on the hopper 90 (as shown) or may have been taken out already.

During this rotation the rotation system will control the speed of the rotation, and the inclinometer will provide information on the rotation angle being performed.

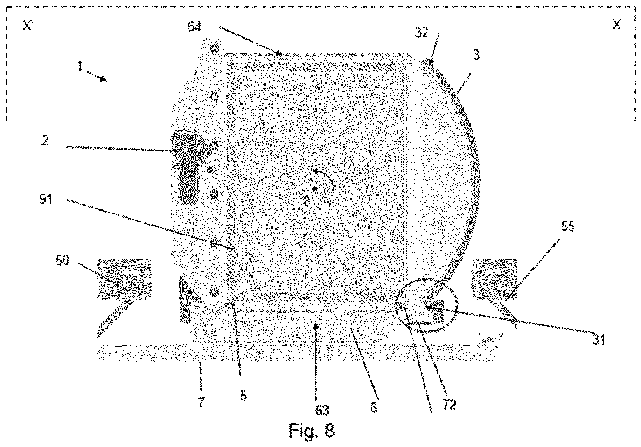

Sensors will fail to detect goods remaining in the bin when the bin is tipped over its maximum angle, in this embodiment over 180°C. the bin tipper is now in a position to return to its original starting position. First, the rotary unit 6 rotated back over 90°, while the upper wall 3 is still held fixed by the studs 72, until the position as shown in figure 8 is obtained. The upper wall 3 now again fully closes the upper side of the rotary unit 6.

By a continued rotation backwards, as of 90°, the upper wall will no longer be held by the studs 72 and will corotate until the rotary unit 6 is in its staring position at 0°. The inclinometer will indeed indicate this compete return and the sensor adapted to sense the zero position will sense the rotation being finished.

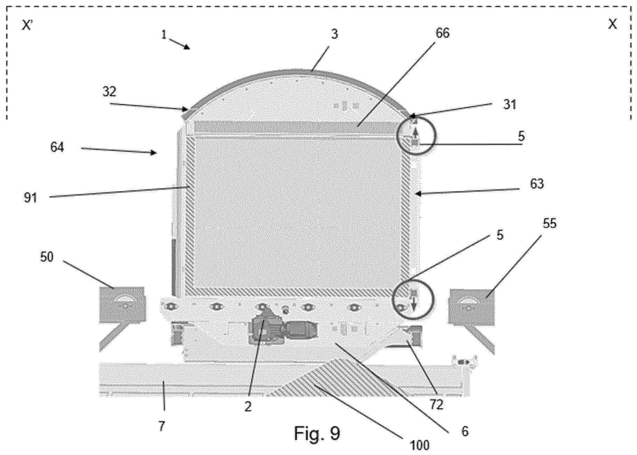

At this moment, as shown in figure 9, the stops 5 are opened and the stop detection sensors 14 on both sides must confirm that the stops 5 are open , preventing a bin from passing through the rotary unit 6. The driven roller conveyers 4 will move the tipped bin through the second open traverse side 64 onto the exit waiting unit 55. The sensors on this exit waiting unit 55 will sense the bin passing onto the exit waiting unit. When the bin is now passed entirely out of the rotary unit onto the exit waiting unit 55, the whole cycle may start again or tipping a further bin.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Reference figures**

| | | | |
|---|---|---|---|
| 1 | bin tipper | 61 | lateral side wall |
| 2 | rotating system | 62 | lateral side wall |
| 3 | upper wall | 63 | traverse side |
| 4 | roller conveyer | 64 | traverse side |
| 5 | stops | 66 | rim |
| 6 | rotary unit | 71 | bottom surface |
| 7 | fixed part | 72 | stud |
| 8 | axis of rotation | 90 | hopper |
| 10 | inductive sensor | 91 | bin |
| 11 | inclinometer | 92 | transport belt |
| 12 | sensor | 93 | transport belt |
| 13 | bin detector | 100 | goods |
| 14 | stop detectors | | |
| 31 | leading edge | | |
| 32 | tailing edge | A | width of bin |
| 50 | input waiting unit | B | height |
| 55 | exit waiting unit | R | radius of upper wall |

## Claims

**1.** A bin tipper (1) comprising
- a rotary unit (6) comprising:
∘ two lateral side walls (61, 62), both of which are bounded at the top by a circular arched edge;
∘ an upper wall which at least partially coincides with the cylindrical mantle surface between the circular arced edges of the two lateral side walls in a transverse direction and which spans the distance between the circular arced edges of the two lateral side walls, and which is rotatable around a first axis of rotation encompassing the centers of the two circular arc edges;
∘ two transverse faces (63, 64) between the two lateral side walls, at least one of which is an open transverse face,
∘ a bottom surface,
- a fixed unit (7) comprising a bottom surface that is at least partly open, the rotary unit being suspended rotatable around a second axis of rotation (8) in this fixed unit and where the second axis of rotation is parallel to the first axis of rotation,
- a rotation system to rotate the rotary unit around the second axis of rotation;
- at least one blocking means preventing the upper wall from rotating with the rotary unit from a predefined rotation angle of the rotary unit onwards around the second axis of rotation.

**2.** A bin tipper according to claim 1, wherein said a predefined rotation angle of the rotary unit is 75° or more.

**3.** A bin tipper according to any one of the preceding claims, wherein the full upper wall coincides with at least a part of the cylindrical mantle surface between the circular arced edges of the two lateral side walls.

**4.** A bin tipper according to claim 3, wherein the direction of rotation of the rotary unit defines a leading transverse face and a tailing transfers face, said part of the cylindrical mantle surface between the circular arced edges of the two lateral side walls abuts the upper edge of the leading transverse face.

**5.** A bin tipper according to any one of the preceding claims, wherein the full upper wall coincides with the total cylindrical mantle surface between the circular arced edges of the two lateral side walls.

**6.** A bin tipper according to any one of the preceding claims, wherein both transverse faces (63, 64) are open transverse faces.

**7.** A bin tipper according to any one of the preceding claims, wherein the first and second axis of rotation coincide.

**8.** A bin tipper according to claim 7, wherein the square of maximum height measured between an outer point of the circular arced edges of the two lateral side walls and the bottom surface (B) is less than or equal to four times the square of the radius (R) of the circular arced edges, minus the square of the maximum width of the two lateral side walls (A).

**9.** A bin tipper according to any one of the preceding claims, wherein the fixed unit comprises a frame, said blocking means comprises one or more parts of said frame intersecting with the rotating path of the leading edge of the upper wall during rotation.

**10.** A bin tipper according to any one of the preceding claims, wherein the rotary unit comprises one or more bin sensors for detecting the presence of and/or the position of a bin in the rotary unit.

**11.** A bin tipper according to any one of the preceding claims, wherein the rotary unit comprises one or more sensors for determining the rotational position of the rotary unit.

**12.** A bin tipper according to any one of the preceding claims, wherein the rotary unit comprises one or more movable impediments to block the movement of a bin in view of the rotary unit during rotation.

**12.** A bin tipper according to claim 11, wherein the rotary unit comprises one or more sensors for determining the position of the one or more moveable impediments.

**13.** The use of a bin tipper according to any one of the preceding claims, for removing goods in a bin or container, such as storage containers of transport containers.

**14.** The use according to claim 13, wherein the goods are tipped vertically downwards to a position under the bin tipper.

**15.** The use according to any one of the claims 13to 14, wherein the goods are root crops such as potatoes, onions, carrots, turnips, beets and in particular potatoes, bulbs like flower bulbs, e.g. tulip bulbs, whether or not freshly harvested or washed or peeled.
